# EUROPEAN PATENT APPLICATION

(11) **EP 0 992 891 A1**
(43) Date of publication of application: **12.04.2000**
(21) Application number: 98402453.9
(22) Date of filing: 06.10.1998
(51) Int. Cl.: G06F 9/38

(54) **A processor**

(71) Applicant: TEXAS INSTRUMENTS INC., Dallas, Texas 75243 (US); TEXAS INSTRUMENTS FRANCE, 06271 Villeneuve Loubet Cédex (FR)
(72) Inventor: Laurenti, Gilbert, 06570 Saint Paul de Vence (FR); Ponsot, Eric, 06140 Vence (FR); Djafarian, Karim, Batiment B1 06140 Vence (FR); Boyadjian, Alain, 06220 Vallauris (FR); Couvrat, Marc, 06700 Saint Laurent du Var (FR)
(74) Representative: Potter, Julian Mark

(57) **Abstract**

A processing engine is responsive to a first condition instruction to conditionally execute a second instruction at a selectable pipeline stage for the processing engine. Condition evaluation circuitry is included in the processing engine to evaluate conditions upon which execution of the second instruction is dependent. Preferably, the second instruction may be conditionally executed at selectable sets of pipeline stages.

## Description

### FIELD OF INVENTION

The present invention relates to processing engines, and in particular but not exclusively, to the conditional execution of instructions in such processing engines.

### BACKGROUND OF INVENTION

It is known to provide for parallel execution of instructions in microprocessors using multiple instruction execution units. Many different architectures are known to provide for such parallel execution. Providing parallel execution increases the overall processing speed. Typically, multiple instructions are provided in parallel in an instruction buffer and these are then decoded in parallel and are dispatched to the execution units. Microprocessors are general purpose processing engines which require high instruction throughputs in order to execute software running thereon, which can have a wide range of processing requirements depending on the particular software applications involved. Moreover, in order to support parallelism, complex operating systems have been necessary to control the scheduling of the instructions for parallel execution.

Many different types of processing engines are known, of which microprocessors are but one example. For example, Digital Signal Processors (DSPs) are widely used, in particular for specific applications. DSPs are typically configured to optimise the performance of the applications concerned and to achieve this they employ more specialised execution units and instruction sets. They have not, however, been provided with the parallel instruction execution architectures found in microprocessors and do not operate under the operating systems used to control such microprocessors.

In a DSP or microprocessor for example, machine-readable instructions stored in a program memory are sequentially executed by the processing engine in order for the processing engine to perform operations or functions. The sequence of machine-readable instructions is termed a "program". Although the program instructions are typically performed sequentially, certain instructions permit the program sequence to be interrupted, and it is often necessary that the execution of later instructions are conditional upon an earlier instruction or the result of such an earlier instruction. In such circumstances, a later instruction is not executed should the previous instruction or result of the previous instruction not meet certain conditions.

An instruction is dispatched to the decode unit but any result of that instruction after the condition is evaluated, such as a register or memory update, is cancelled if the condition is not met. In order to provide conditional execution for as many pipeline stages as possible, the condition is evaluated early on in the pipeline, and the condition is not satisfied updates for remaining pipeline stages are cancelled. Thus, in a conventional system an instruction resulting in a register to register transfer for example, undergoes all phases of the pipeline, and in the data flow stage, execute stage of a pipeline processor for example, the conditional execution has effect and the transfer is cancelled. That is to say any update on the basis of the later instruction is cancelled after the condition is evaluated. This includes any address updates that might be needed in the address stage, which are also cancelled, and therefore would need to be explicitly instructed later on. Additionally, an update occurring early on in the pipeline would need to wait until the condition result is known before it could be executed, thus latency is introduced into the pipeline.

An algorithm showing a conventional conditional execution instruction is shown below.

The conditional instruction has the syntax:-
If (condition) execute (n)
where n = 1 or 2
- Execution:: if (condition)
then
next n instructions executed
else
execute nop for next n instructions.

If n = 1 and the condition is met the 1 word instruction following the conditional execution instruction is executed.
If n = 2 and the condition is met the one 2 word instruction following the conditional execution is executed.
If the condition is not met one or two nops are executed depending on the value of n. A nop is a no operation op-code and is a dummy code which uses a processor cycle but returns no result nor performs any function.

For the conventional conditional execution instruction, the condition is tested two full cycles before the conditional instruction is due to be executed.

The present invention is directed to improving the performance of processing engines such as, for example but not exclusively, digital signal processors.

### SUMMARY OF INVENTION

In a first aspect in accordance with the invention a processing engine, comprising an instruction pipeline including a plurality of pipeline stages, is responsive to a first condition instruction to conditionally execute a second instruction at a selectable pipeline stage. Therefore, it is possible to halt or inhibit further operation of the pipeline at a stage appropriate to the second instruction. That is to say, if the second instruction is to update a register usually accessed during an address stage of the pipeline, pipeline operation is inhibited at the address stage. Thereby, further pipeline operation does not occur and power consumption may be reduced.

Additionally, by providing selectable stages for conditional execution latency within the pipeline for conditional execution processes and injection of extra processor cycles in the pipeline can be reduced. For example, in a data flow operation pointer post modification can be carried out if it is unaffected by the condition and the later stages only if the pipeline are inhibited.

The condition instruction may be executed on top of a data flow instruction, by virtue of there being provided a condition evaluation mechanism. The condition evaluation mechanism is preferably selectably operable for two or more pipeline stages. Thus, by having dedicated circuitry for evaluation a condition a data flow instruction need not be delayed pending the evaluation of that condition.

The condition is evaluated at an appropriate pipeline stage depending upon the nature of the second instruction, since the conditional evaluation mechanism may be made responsive to the first condition instruction to test for a condition at a pipeline stage which itself is determined by the second instruction.

Optionally, two or more condition evaluation mechanisms may be provided, respectively operable for two or more pipeline stages, for example the address read and execute stages or the execute stage of the instruction pipeline. The condition evaluation may be carried out for selectable pipeline stages by condition evaluation mechanisms disposed in execution units in respect of the operable for various pipeline stages. Optionally, the execution units may be operable for more than one pipeline stage.

Suitably, the processing engine is responsive to a first mode for the first condition instruction to inhibit a first set of pipeline stages, and responsive to a second mode for the first condition instruction to inhibit a second set of pipeline stages for this second instruction. Suitably, the first set of pipeline stages comprises an execution stage, and the second set comprises the address, access, read and execute stages of the pipeline. Thereby, independent control of address flow and data flow is provided.

Preferably, the first condition instruction and second instruction may be configured in an instruction buffer such that they are suitable for parallel execution by the processing engine. Suitably, the instruction buffer comprises a dual dispatch buffer which dispatches the first condition instruction and second instruction to first and second instruction decoder mechanisms. In this manner, the processing throughput of the processing engine may be improved.

Optionally, the instruction buffer is configured to buffer the first condition instruction with another, independently operable instruction. The first condition instruction and the independently operable instruction can be executed in parallel. The second instruction, which is conditionally executed dependent upon the first condition instruction, follows the first and independently operable instruction in the instruction sequence. That is to say, it is behind the first and independently operable instruction in the instruction buffer queue.

The processing engine may be configured to be responsive to the first condition instruction in order to conditionally execute a following second instruction. The conditional execution of a following second instruction may occur at an execute stage of the instruction pipeline, or from the address stage to the execute stage of the instruction pipeline. The second instruction may be a pair of instructions. Thus, by being capable of operating on different instruction formats, a wide variety of instructions in the processing engine instruction set may be made conditional.

In a second aspect in accordance with the invention, a digital signal processor system comprises a processing engine as described above, and a computer. The computer includes a compiler for compiling instructions for execution by the digital signal processor. The compiler determines whether the first condition instruction is of a first or second mode, and configures the second instruction for conditional execution at a pipeline stage corresponding to which of the first or second mode the first condition instruction belongs. Thus, a user of digital signal processor may select at which stage of the instruction pipeline they wish the second instruction to be conditional. This provides enhanced flexibility in programming the digital signal processor, and the opportunity to optimise power consumption by inhibiting later execution units which would be utilised at later stages in the processing pipeline.

Preferably, the compiler concatenates the first condition instruction with the second instruction or independently operable instruction to facilitate parallel execution thereof. Such concatenation and parallel execution serves to improve processing throughout. Suitably, the compiler determines which program instructions are capable of being concatenated and then compiles first condition instructions with the second or third instructions for concatenation and subsequent parallel execution.

In a third aspect in accordance with the invention, there is provided a method for improving the performance of a processing engine, comprising conditionally executing a second instruction at a selectable pipeline stage. The second instruction is then conditionally depending upon a first condition instruction. In this manner, it is possible to provide for the conditional execution of any second instruction. Thus, flexibility of the processing engine is improved and the instruction set necessary for the processing engine is reduced, since each conditional instruction does not have to be a unique instruction, but may be formed by a combination of a conditional execution instruction operating on an instruction from the instruction set of the processing engine.

Suitably, the first condition instruction is associated with a following second instruction. The first condition instruction modifies the second instruction such that the second instruction is conditionally executed depending upon the result of the first condition instruction.

In a preferred embodiment in accordance with the second aspect of the invention, the first condition instruction is compiled as a standalone instruction. This may occur even if the cycle preceding the first condition instruction is empty, since it may be necessary to account for latency in the processing pipeline.

Embodiments of the invention are particularly suitable for use in portable apparatus, such as wireless communication devices. Typically, such a wireless communication device comprises a user interface including a display such as liquid crystal display or a TFT display, and a keypad or keyboard for inputting data to the communications device. Additionally, a wireless communication device will also comprise a transceiver and an antenna for wireless communication with a radio telephone network or the like.

### BRIEF DESCRIPTION OF THE DRAWINGS

Particular embodiments in accordance with the invention will now be described, by way of example only, and with reference to the accompanying drawings in which like reference signs are used to denote like parts, unless otherwise stated, and in which:
Figure 1 is a schematic block diagram of a processor in accordance with an embodiment of the invention;
Figure 2 is a schematic diagram of a core of the processor of Figure 1;
Figure 3 is a more detailed schematic block diagram of various execution units of the core of the processor of Figure 1;
Figure 4 is schematic diagram of an instruction buffer queue and an instruction decoder controller of the processor of Figure 1;
Figure 5 is a representation of pipeline phases of the processor of Figure 1;
Figure 6 is a diagrammatic illustration of an example of operation of a pipeline in the processor of Figure 1;
Figure 7 is a schematic representation of the core of the processor for explaining the operation of the pipeline of the processor of Figure 1;
Figure 8 illustrates examples of instruction formats suitable for an embodiment in accordance with the invention;
Figure 9 is a schematric illustration of condition evaluation circuitry suitable for an embodiment in accordance with the invention;
Figure 10 is a schematic illustration of combinations of instructions suitable for an embodiment of the invention;
Figure 11 is a schematic illustration of pipeline latency for prior art processing engines;
Figure 12 is a schematic illustration of the operation of a pipelined processing engine for a conditional execution instruction in accordance with an embodiment of the invention;
Figure 13 is a schematic illustration of the operation of a pipelined processing engine for a further conditional execution instruction in accordance with an embodiment of the invention;
Figure 14 is a schematic illustration of the operation of a pipelined processing engine for a further conditional execution instruction in accordance with an embodiment of the invention;
Figure 15 is a schematic illustration of the operation of a pipelined processing engine for a further conditional execution instruction in accordance with an embodiment of the invention;
Figure 16 is a schematic illustration of the operation of a pipelined processing engine for a further conditional execution instruction in accordance with an embodiment of the invention;
Figure 17 is a schematic illustration of the operation of a pipelined processing engine for a further conditional execution instruction in accordance with an embodiment of the invention;
Figure 18 is a schematic illustration of the operation of a pipelined processing engine for a further conditional execution instruction in accordance with an embodiment of the invention; and
Figure 19 is a schematic illustration of a wireless communication device suitable for incorporating in an embodiment of the invention.

### DESCRIPTION OF PARTICULAR EMBODIMENTS

Although the invention finds particular application to Digital Signal Processors (DSPs), implemented for example in an Application Specific Integrated Circuit (ASIC), it also finds application to other forms of processing engines.

The basic architecture of an example of a processor according to the invention will now be described.

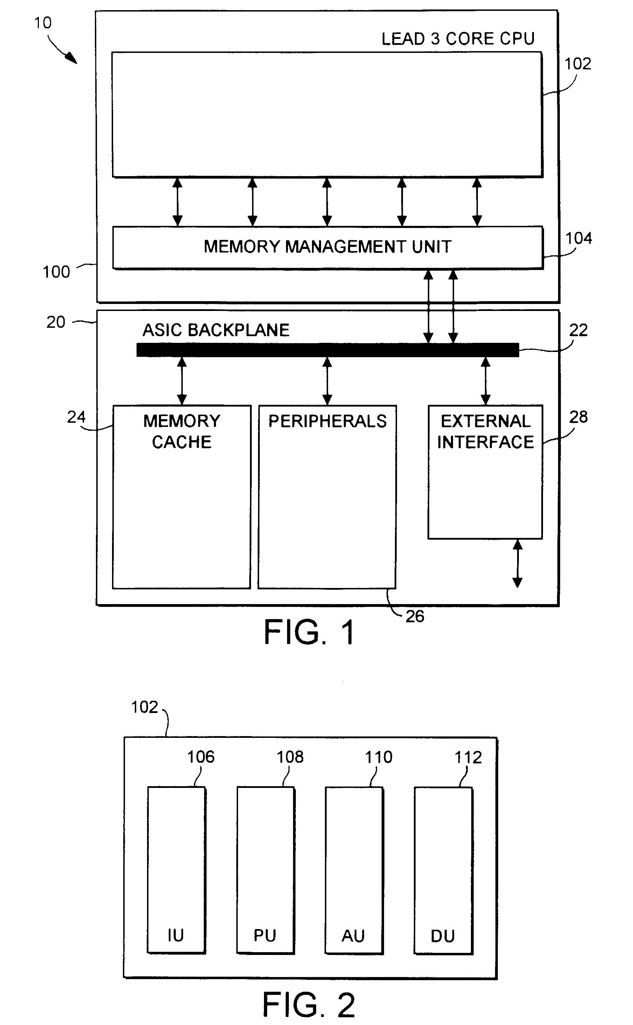

Figure 1 is a schematic overview of a processor 10 forming an exemplary embodiment of the present invention. The processor 10 includes a processing engine 100 and a processor backplane 20. In the present embodiment, the processor is a Digital Signal Processor 10 implemented in an Application Specific Integrated Circuit (ASIC).

As shown in Figure 1, the processing engine 100 forms a central processing unit (CPU) with a processing core 102 and a memory interface, or management, unit 104 for interfacing the processing core 102 with memory units external to the processor core 102.

The processor backplane 20 comprises a backplane bus 22, to which the memory management unit 104 of the processing engine is connected. Also connected to the backplane bus 22 is an instruction cache memory 24, peripheral devices 26 and an external interface 28.

It will be appreciated that in other embodiments, the invention could be implemented using different configurations and/or different technologies. For example, the processing engine 100 could form the processor 10, with the processor backplane 20 being separate therefrom. The processing engine 100 could, for example be a DSP separate from and mounted on a backplane 20 supporting a backplane bus 22, peripheral and external interfaces. The processing engine 100 could, for example, be a microprocessor rather than a DSP and could be implemented in technologies other than ASIC technology. The processing engine, or a processor including the processing engine, could be implemented in one or more integrated circuits.

Figure 2 illustrates the basic structure of an embodiment of the processing core 102. As illustrated, the processing core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

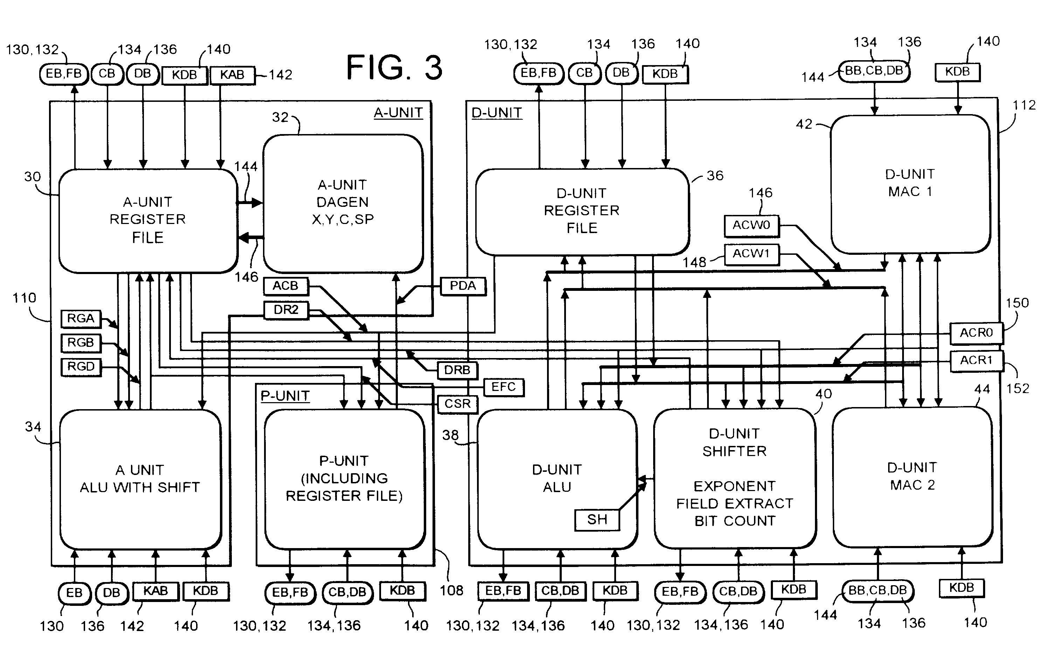

Figure 3 illustrates the P Unit 108, A Unit 110 and D Unit 112 of the processing core 102 in more detail and shows the bus structure connecting the various elements of the processing core 102. The P Unit 108 includes, for example, loop control circuitry, GoTo/Branch control circuitry and various registers for controlling and monitoring program flow such as repeat counter rcgisters and interrupt mask, flag or vector registers. The P Unit 108 is coupled to general purpose Data Write busses (EB, FB) 130, 132, Data Read busses (CB, DB) 134, 136 and a coefficient program bus (BB) 138. Additionally, the P Unit 108 is coupled to sub-units within the A Unit 110 and D Unit 112 via various busses labeled CSR, ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, ..., DR3) which may also be used for data flow as well as address generation. Additionally, the register file includes 16 bit circular buffer registers and 7 bit data page registers. As well as the general purpose busses (EB, FB, CB, DB) 130, 132, 134, 136, a coefficient data bus 140 and a coefficient address bus 142 are coupled to the A Unit register file 30. The A Unit register file 30 is coupled to the A Unit DAGEN unit 32 by unidirectional busses 144 and 146 respectively operating in opposite directions. The DAGEN unit 32 includes 16 bit X/Y registers and coefficient and stack pointer registers, for example for controlling and monitoring address generation within the processing engine 100.

The A Unit 110 also comprises the ALU 34 which includes a shifter function as well as the functions typically associated with an ALU such as addition, subtraction, and AND, OR and XOR logical operators. The ALU 34 is also coupled to the general-purpose busses (EB, DB) 130, 136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.

As illustrated, the D Unit 112 includes a D Unit register file 36, a D Unit ALU 38, a D Unit shifter 40 and two multiply and accumulate units (MAC1, MAC2) 42 and 44. The D Unit register file 36, D Unit ALU 38 and D Unit shifter 40 are coupled to busses (EB, FB, CB, DB and KDB) 130, 132, 134, 136 and 140, and the MAC units 42 and 44 are coupled to the busses (CB, DB, KDB) 134. 136, 140 and data read bus (BB) 144. The D Unit register file 36 includes 40-bit accumulators (AC0, ..., AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write busses (ACW0, ACW1) 146, 148, and from the D Unit shifter 40 over accumulator write bus (ACW1) 148. Data is read from the D Unit register file accumulators to the D Unit ALU 38, D Unit shifter 40 and MACs 1&2 42, 44 over accumulator read busses (ACR0, ACR1) 150, 152. The D Unit ALU 38 and D Unit shifter 40 are also coupled to sub-units of the A Unit 108 via various busses labeled EFC, DRB, DR2 and ACB.

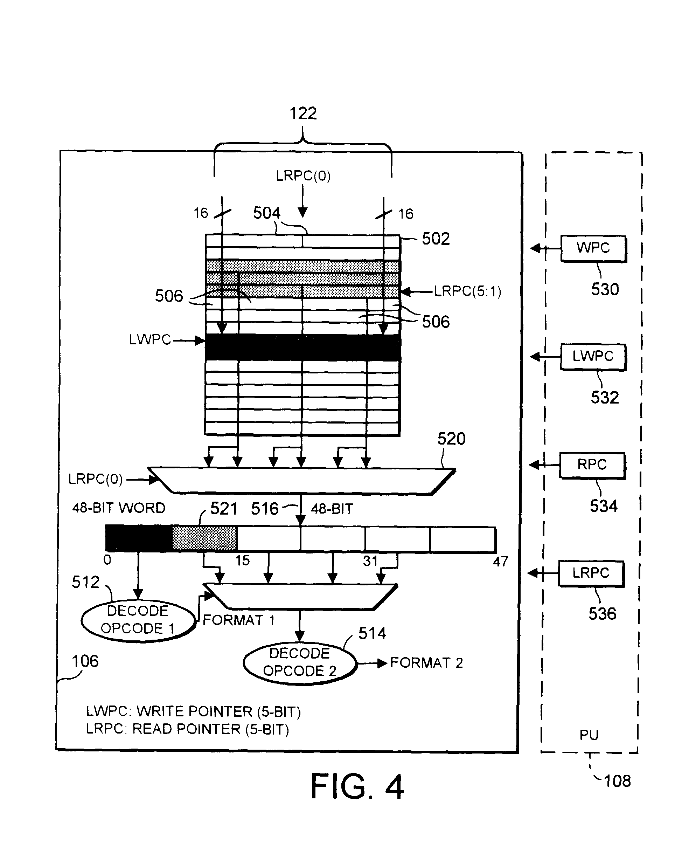

Referring now to Figure 4, there is illustrated an instruction buffer unit 106 comprising a 32 word instruction buffer queue (IBQ) 502. The IBQ 502 comprises 32x16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder(s) 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder(s) 512 and 514.

The instructions are formed into a 48-bit word and are loaded into the instruction decoders 512, 514 over a 48-bit bus 516 via multiplexors 520 and 521. It will be apparent to a person of ordinary skill in the art that the instructions may be formed into words comprising other than 48-bits, and that the present invention is not limited to the specific embodiment described above.

The bus 516 can load a maximum of two instructions, one per decoder, during any one instruction cycle. The combination of instructions may be in any combination of formats, 8, 16, 24, 32, 40 and 48 bits, which will fit across the 48-bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decoding thereof. The multiplexing associated with the alignment of instructions with byte boundaries is performed in multiplexors 520 and 521.

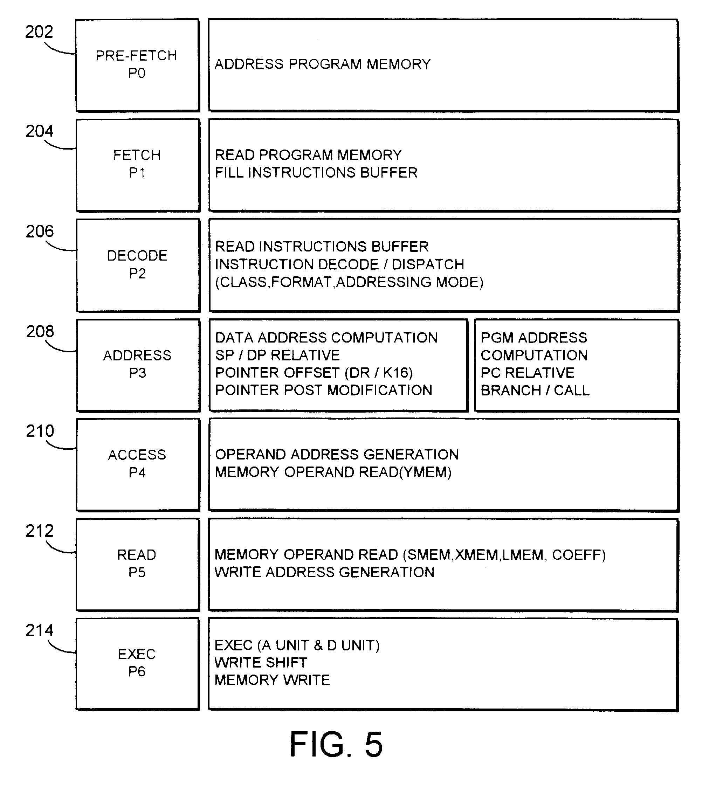

The processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface, or memory management unit 104.

In the next stage, FETCH (P1) stage 204, the program memory is read and the I Unit 106 is filled via the PB bus 122 from the memory management unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is output and the memory operand, the address of which has been generated in a DAGEN X operator with an Xmem indirect addressing mode, is then READ from indirectly addressed X memory (Xmem).

The next stage of the pipeline is the READ (P5) stage 212 in which a memory operand, the address of which has been generated in a DAGEN Y operator with an Ymem indirect addressing mode or in a DAGEN C operator with coefficient address mode, is READ. The address of the memory location to which the result of the instruction is to be written is output.

In the case of dual access, read operands can also be generated in the Y path, and write operands in the X path.

Finally, there is an execution EXEC (P6) stage 214 in which the instruction is executed in either the A Unit 110 or the D Unit 112. The result is then stored in a data register or accumulator, or written to memory for Read/Modify/Write or store instructions. Additionally, shift operations are performed on data in accumulators during the EXEC stage.

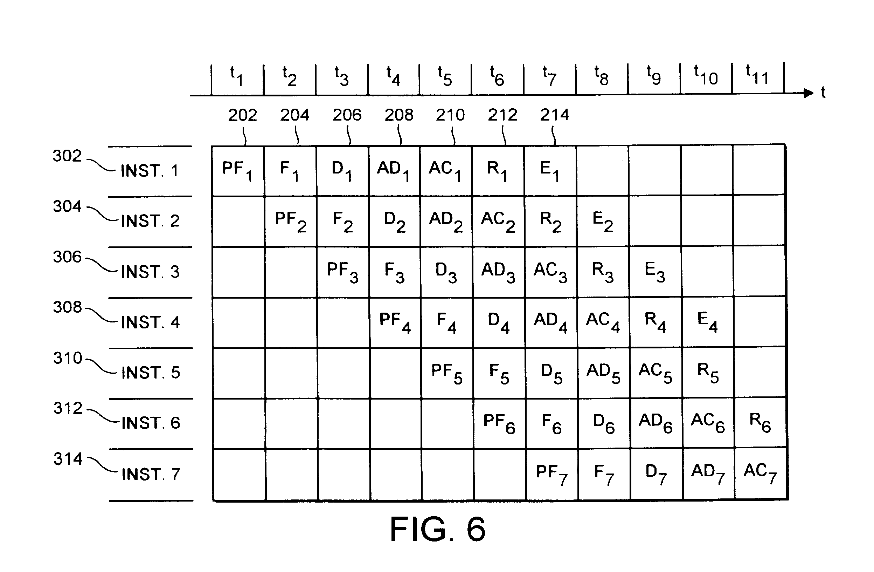

The basic principle of operation for a pipeline processor will now be described with reference to Figure 6. As can be seen from Figure 6, for a first instruction 302, the successive pipeline stages take place over time periods T₁-T₇. Each time period is a clock cycle for the processor machine clock. A second instruction 304, can enter the pipeline in period T₂, since the previous instruction has now moved on to the next pipeline stage. For instruction 3, 306, the PRE-FETCH stage 202 occurs in time period T₃. As can be seen from Figure 6 for a seven stage pipeline a total of 7 instructions may be processed simultaneously. For all 7 instructions 302-314, Figure 6 shows them all under process in time period T₇. Such a structure adds a form of parallelism to the processing of instructions.

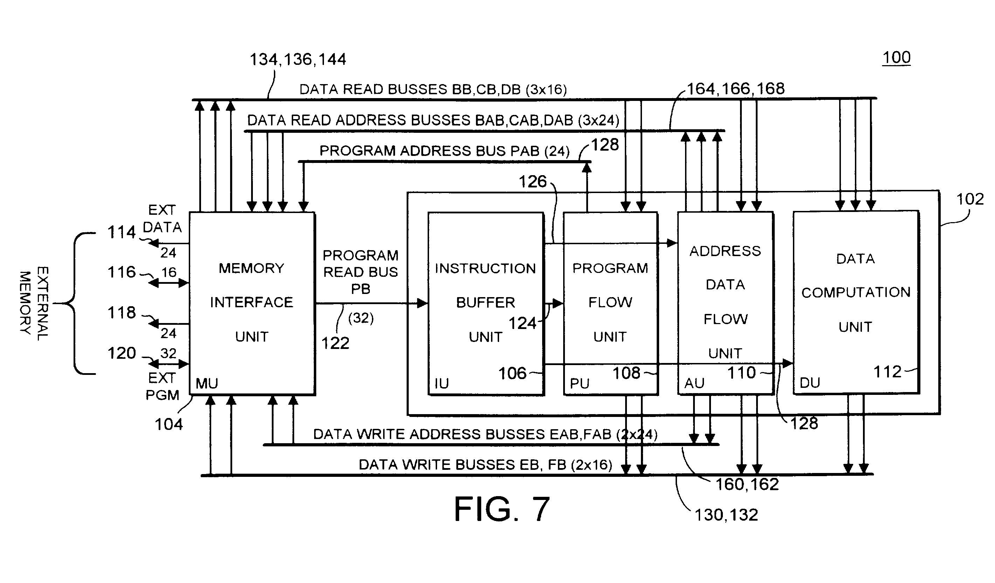

As shown in Figure 7, the present embodiment of the invention includes a memory management unit 104 which is coupled to external memory units via a 24 bit address bus 114 and a bi-directional 16 bit data bus 116. Additionally, the memory management unit 104 is coupled to program storage memory (not shown) via a 24 bit address bus 118 and a 32 bit bi-directional data bus 120. The memory management unit 104 is also coupled to the I Unit 106 of the machine processor core 102 via a 32 bit program read bus (PB) 122. The P Unit 108, A Unit 110 and D Unit 112 are coupled to the memory management unit 104 via data read and data write busses and corresponding address busses. The P Unit 108 is further coupled to a program address bus 128.

More particularly, the P Unit 108 is coupled to the memory management unit 104 by a 24 bit program address bus 128, the two 16 bit data write busses (EB, FB) 130, 132, and the two 16 bit data read busses (CB, DB) 134, 136. The A Unit 110 is coupled to the memory management unit 104 via two 24 bit data write address busses (EAB, FAB) 160, 162, the two 16 bit data write busses (EB, FB) 130, 132, the three data read address busses (BAB, CAB, DAB) 164, 166, 168 and the two 16 bit data read busses (CB, DB) 134, 136. The D Unit 112 is coupled to the memory management unit 104 via the two data write busses (EB, FB) 130, 132 and three data read busses (BB, CB, DB) 144, 134, 136.

Figure 7 represents the passing of instructions from the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

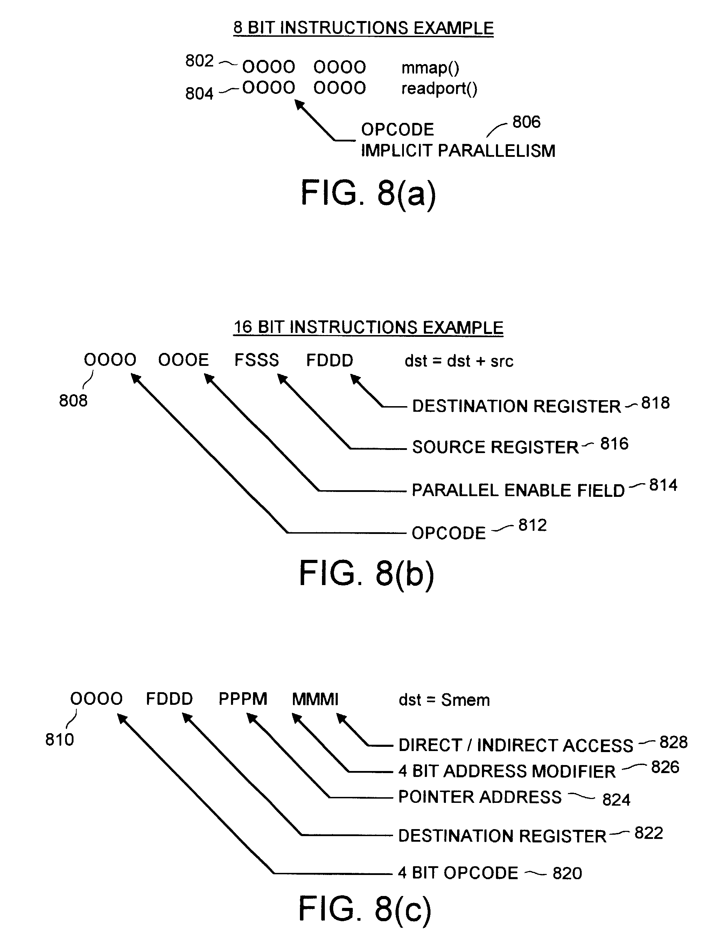

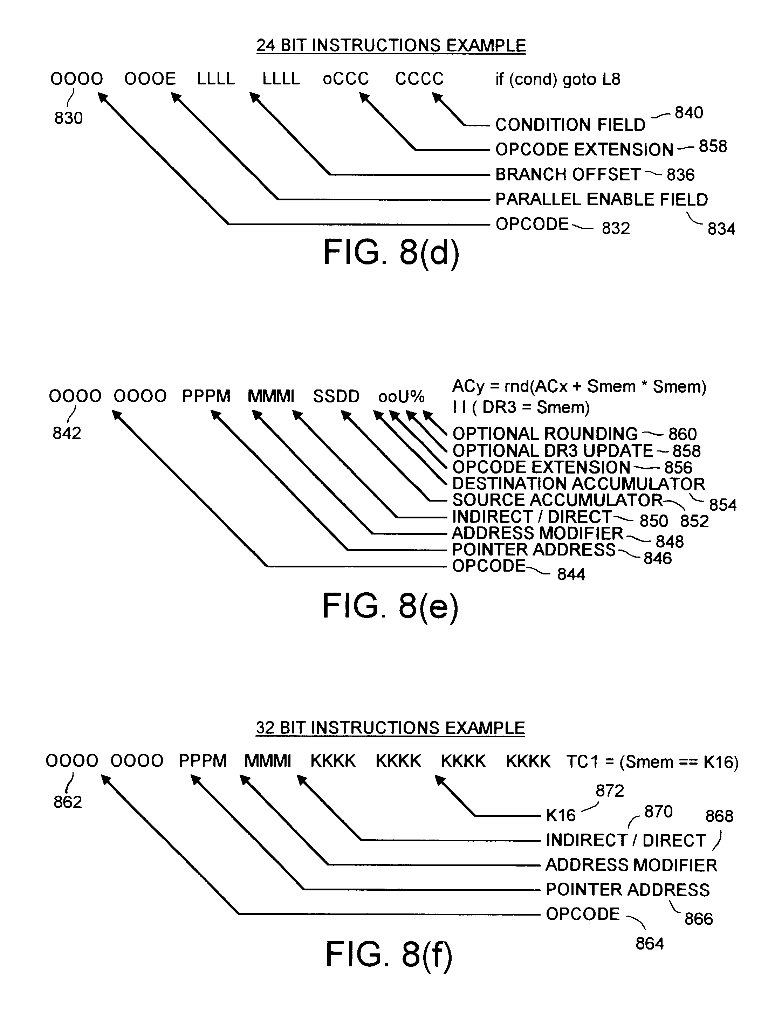

Examples of instruction formats suitable for use with this embodiment will now be described with reference to the instructions shown in Fig. 8. It will be understood by persons of ordinary skill that the instructions shown in Fig. 8 are examples, and this embodiment is not limited to those instructions.

Fig. 8(a) shows two 8 bit instruction 802 and 804, each only comprising an op-code "0..."· 206. Such 8 bit instructions have implied parallelism since there are qualifiers which are associated with memory instructions. For example, mmap(0) is byte qualifier and when associated with a generic memory instruction selects the memory registers in bank 0 regardless of the current data page programming. Readport() is a byte qualifier which when associated with a generic memory instruction selects I/O space instead of data memory space.

Figs. 8(b) and (c) illustrate two 16 bit instructions 808 and 810 respectively adding the contents of destination and source registers and storing the result in the destination register, and loading the contents of a short memory location in a destination register (dst=smem). Instruction 808 is formatted to have an op-code 812 comprising 7 bits followed by a parallel enable field bit 814. The op-code 812 uniquely defines the instruction, and the parallel enable field bit 814 can be either set or unset to explicitly command execution of instruction 808 in parallel with another instruction. The next four bits identify the source register 816 and the last four bits identify the destination register 818 for the instruction.

Turning now to the example shown in Fig. 8(c), instruction 810 is a Multiply and Accumulate (MAC) instruction and comprises a 4 bit op-code 820, followed by four bits, 822, identifying the destination register The instruction, 810, shown by way of example in Fig. 8(c) uses an indirect addressing mode and includes a 3 bit pointer address 824, followed by a 4 bit address modifier, 826. The last bit 828, indicates either Direct or Indirect addressing mode and is shown in Fig. 8(c) as set to Indirect mode.

Further examples of instruction formats suitable for this embodiment are shown in Figs. 8(d) and (e), which each show a 24 bit instruction as an example. Fig 8 (d) shows a conditional go to instruction 830, which causes the program to branch to a different part of program memory if the condition is satisfied. The first seven bits of the instruction shown in Fig. 8 (d) are the op-code 832, followed by a parallel enable field bit 834. The branch offset 836 for the instruction is given by the eight bits following the parallel enable field bit 834. A single op-code extension bit 830 is provided to modify the instruction, and the condition to be evaluated is given by the seven bits in the condition field 840. A further example of a 24 bit instruction 842 is shown in Fig. 8(e) which squares the memory operand (Smem) and adds the result to the contents of accumulator Acx., rounds the total and stores the total in the accumulator. The memory operand is optionally saved to register DR3. The op-code 844 comprises the first 8 bits, followed by a 3 bit pointer address 846. The address modifier 848 for the indirect addressing mode comprises the next 4 bits, and is followed by the Direct/Indirect access bit 850. The source register identity 852, which in this case is an accumulator, is given by 2 bits followed by 2 bits identifying the destination register 854, which is also an accumulator. In this example, the instruction 842 has a 2 bit op-code extension 856 followed by a single bit indicating an update 858 or not of a particular data register, DR3. The instruction 842 has a least significant bit indicating rounding 860.

An example of a 32 bit instruction 862 is shown in Fig. 8(f). Instruction 862 loads test control register 1 (TC1) with the result of a 16 bit signed constant compared with the content of a single memory location. Op-code 864 comprises 8 bits followed by a 3 bit pointer address 866, 4 bit address modifier 868 and Direct/Indirect address mode indicator 870 (showing Indirect mode). The least significant 16 bits are reserved for the 16 bit constant value 872.

It will be evident to a person of ordinary skill in the art that the instructions illustrated in Fig. 8 are by way of example only and the present embodiment is not limited to those examples.

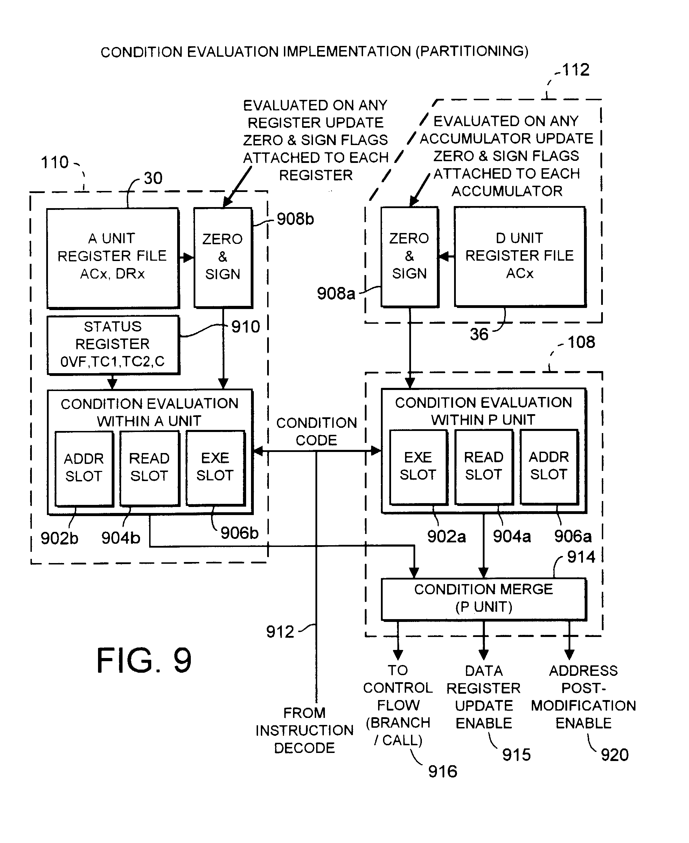

In accordance with a preferred embodiment of the invention, there are provided three condition evaluation circuits. As shown in Fig. 9, three condition evaluation circuits 902a, 904a and 906a are located in the P Unit 108, and three evaluation units 902b, 904b and 906b are located in the A Unit 110 of processing engine 102. The evaluation units 902, 904 and 906 are respectively operable for the address, read and execute stages of the instruction pipeline. Which set of condition evaluation units, a) or b), are used depends upon the source register for the evaluation condition, eg an A Unit 110 or D Unit 112 register. As can be seen from Fig. 9, both the A Unit and D Unit registers have zero and sign bit information, 908b and 908a, associated with them. Additionally, the A Unit 110 includes the status register 910 which contains overflow and test result information. The evaluation circuitry 902, 904 and 906 uses the status register and zero and sign information to carry out the conditional instruction. The condition code for the condition instruction as decoded by the decoder is forwarded on bus 912 to the condition evaluation circuitry to determine the type of condition tested.

The condition result is merged in the condition merge unit 914 located in the P Unit 108, and output to respective control flow 916, data register update enable 918 and address post-modification enable circuitry 920.

It should be noted that the architecture described with reference to Fig. 9 is configured to optimise the signal routing and speed within the processing engine, and the invention is not limited to this specific architecture. Optionally, the condition evaluation circuitry may be split and partitioned between the execution units of the processing engine in any suitable manner, even to the extent of only one set of evaluation circuitry being provided.

In accordance with the preferred embodiment, the conditional execution instruction may be executed, that is to say the condition evaluated, at a particular point in a processing engine pipeline by utilising respective condition evaluation circuitry 902, 904, 906. For example, the condition may be evaluated at the address phase of the pipeline using circuitry 904, in which case updates at further pipeline stages will be conditional upon the result of the evaluation. Optionally, the conditional execution instruction may be executed at the execute phase of the pipeline using circuitry 906, in which case the pipeline would go through all the stages and perform any updates occurring prior to the condition instruction being executed. A further option is to have the conditional execution instruction executed at the read stage of the pipeline using circuitry 904. In this instance, any update in the address stage would be executed, but no updates would be executed in the read or execute stages if the condition is not satisfied. The pipeline stage at which the condition is evaluated is determined by the condition instruction itself and is based on the parameter which is utilised in the condition evaluation.

By providing dedicated condition evaluation circuitry, condition evaluation may be executed on top of data flow, thereby reducing the need for extra processing cycles to carry out the evaluation.

Optionally, further condition evaluation circuitry maybe provided, for example in other execution units such as the I Unit 106. Other, stages of the pipeline maybe made conditional providing suitable condition evaluation circuit is available.

In the preferred embodiment the condition evaluation result is not stored and forwarded along the instruction pipeline, but results in "instruction validation flags V₁ and V₂" being set. For a stand alone instruction only V₁ is set.

V₁ enables instruction 1 and V₂ enables instruction 2. The flags are registered in the instruction decode stage of the pipeline and propagated along the pipeline by being exported to the A Unit 110 in the address stage and to the D Unit 112 in the read stage if the pipeline. If V₁ or V₂ is not set (i.e. not equal to 1) the operation unit process associated with the respective instruction treats the instruction as a "flop" and the execution is invalidated. In this instance the destination register and status register updates are discarded.

By way of example only, Table 1 is provided to illustrate the format and function of condition fields suitable for use in a processing engine in accordance with a preferred embodiment. Table 1 is split into five columns respectively headed Condition Field, Register Field, Condition, Register and Description. The condition field column gives the code for the type of condition being tested. By way of example, the condition field corresponds to the three most significant bits of condition field 840 described in relation to the 24 bit instruction example of Fig. 8(d). The register field column illustrates the bit codes for the register for which the condition is to be evaluated, and corresponds to the four least significant bits of the condition field 840 shown in Fig. 8(d). Where more than one register may be identified, the register field column entry shows the lower and upper ranges of the codes for the registers.

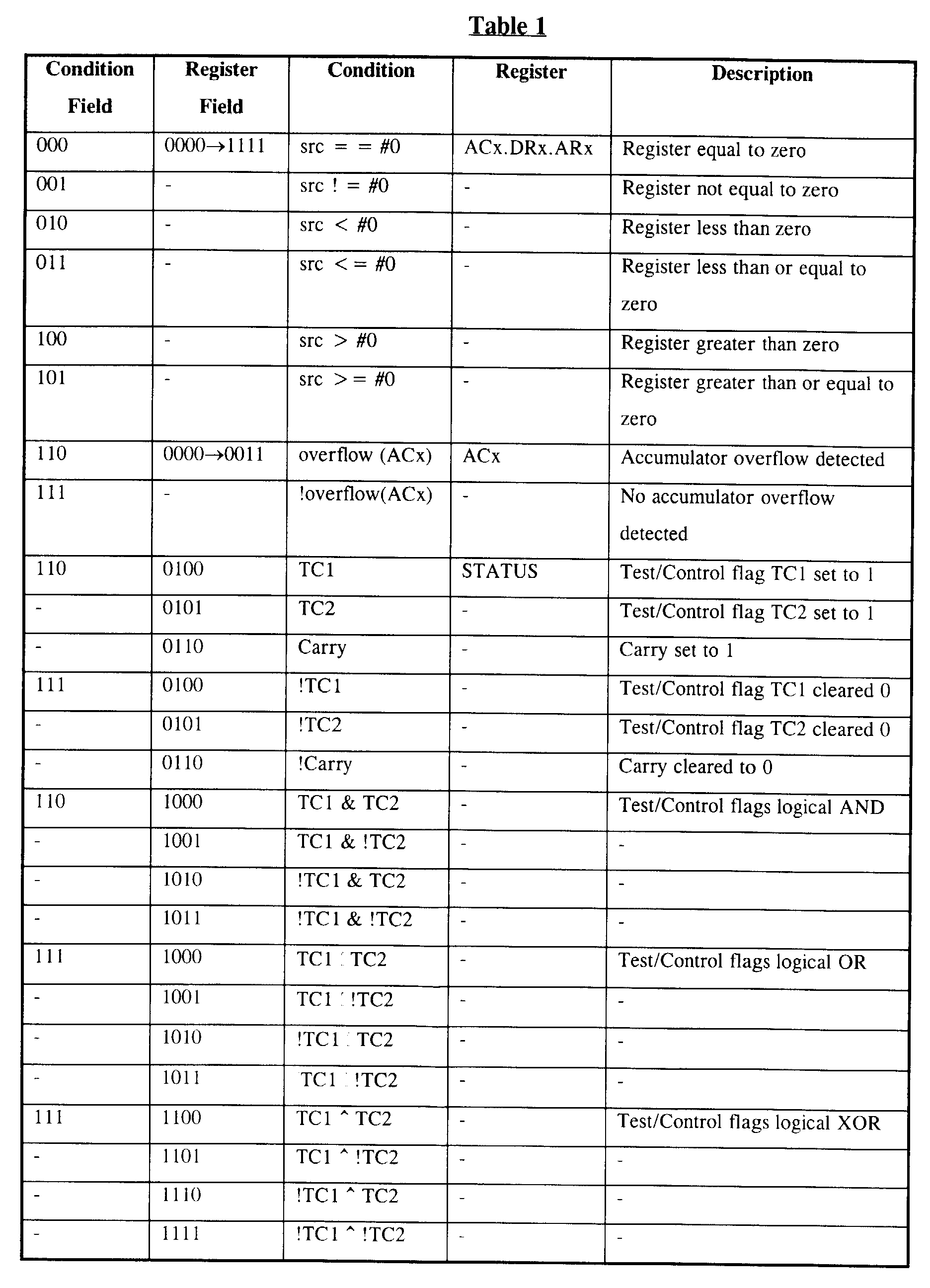

The condition column shows the syntax for the condition and register fields in the first and second columns. The register column provides the alphanumeric tag for the registers identified in the register field column. The final column is a description of the condition that is being evaluated.

Depending upon the condition field code and/or the register field code one of the condition evaluation circuits 902a/b, 904a/b or 906a/b will perform the conditional evaluation. For example, for a condition field "000" having a source register ACx (i.e. an accumulator in the D Unit register file 36), condition evaluation circuitry 906a located in the P Unit 108 is utilised since the condition relates to D Unit 112. Optionally, for the same condition field "000" but a register field indicating register ARx (i.e. a sixteen bit pointer register in the A Unit register file 30), or the Status register 910, condition evaluation circuitry 906b will be utilised since the condition is being evaluated for the contents og an A Unit register.

By utilising appropriate condition fields and register fields as described above, an instruction may be made conditional upon results of either the address, read or execute stages of the processing pipeline.

In accordance with the preferred embodiment the architecture supports up to three condition evaluations within the same cycle, for example:
i) a condition which affects the execute stage only (D_unit option) can be evaluated in the execute stage of the pipeline;
ii) condition evaluation for a conditional branch instruction can be performed in the read stage; and
iii) a condition which affects the address stage of the pipeline can be evaluated in the address stage (AD_unit option).
In accordance with the preferred embodiment. accumulator zero and sign evaluation may be performed on every processor cycle.

The source for the condition evaluation is determined by condition evaluation logic from the condition field in the instruction op-code.

In accordance with the preferred embodiment of the invention, there are two types of conditional execution instruction. The first type operates on an instruction (the "conditional instruction") associated with it to make the execute phase of the processing pipeline conditional upon the result of the condition instruction, (D_unit option). The second type of conditional execution instruction operates on a conditional instruction associated with it to cause the address, access, read and execute stages of the processing pipeline to be conditional upon the result of the conditional execution (AD_unit option) instruction. If the condition defined by the conditional execution instruction is not satisfied, then dependent upon the type of conditional execution instruction, the execution units operable for the execute phase or for the address, access, read and execute stages of the pipeline are inhibited.

For the first type of instruction, the condition is evaluated in the execute stage of the pipeline, and for the second type of instruction the condition may be evaluated in the address, read or execute stage of the pipeline. However, memory write is a special case where the condition is tested in the address stage for a first conditional instruction(XC) or in the read stage for a second condition instruction (XCN) which operates on a next instruction, even if the D_unit option has been selected.

By inhibiting operation of respective execution units, power consumption of the processing engine may be reduced. Additionally, by selecting condition evaluation at a later stage of the pipeline, pipeline latency may be reduced, thereby reducing empty processing cycles (nop).

In accordance with an aspect of the preferred embodiment of the invention, the processing engine is configured to respond to a conditional execution instruction, of the first or second type, comprising 16-bits, in parallel with the conditional instruction. The conditional instruction is conditionally executed on the basis of the conditional execution instruction.

Recalling the foregoing description with reference to Fig. 4, an instruction word comprising up to 48 bits may be dispatched to respective decoders 1 and 2, 512, 514. As will be recalled, the 48-bit word dispatched to the decoders may comprise a combination of 2 instructions, respective instructions each comprising less than 48 bits and their total number of bits being less than or equal to 48 bits. In this manner, it is possible to parallel decode two instructions which respectively fall within the 48-bit word dispatch buffer. Furthermore, an instruction may have implied parallelism which indicates that it is to be decoded in parallel with another instruction, or optionally may have a parallel enable bit "E" set within its instruction format. If the parallel enabled bit "E" is set, then that instruction will be performed in parallel with a preceding instruction.

With reference to the 16 bit conditional execution instruction executable in parallel with the conditional instruction referred to above, it should be noted that in accordance with another preferred embodiment the 16 bit instruction does not comprise a parallel enable bit E. This is because the 16 bit conditional execution instruction acts as an instruction qualifier for the conditional instruction, and is not a stand alone instruction.

Since the conditional execution instruction and next instruction both fit with in the dispatch buffer 1006, it is possible to interrupt the parallel pair of instructions.

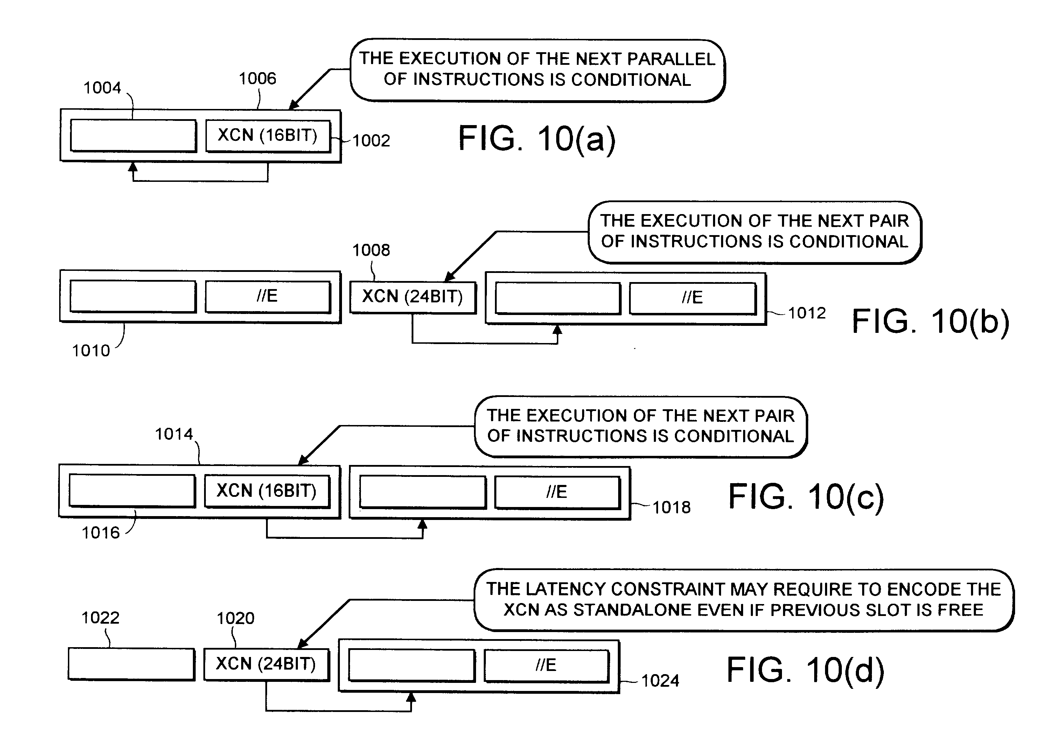

Referring now to Fig. 10(a), there is shown a first conditional execution instruction 1002 operating on a parallel conditional instruction 1004. Both instructions 1002 and 1004 are contained within the 48 bit dispatch buffer 1006.

With reference to Fig. 10 b) to d), a second conditional execute instruction, (XCN) may operate on a next conditional pair of instructions. The next pair of instructions may be conditionally executed based on the preceding XCN instruction. The next conditional pair of instructions comprise either an implied parallelism or an explicit parallelism due to the parallel enable bit "E" being set in the second instruction of the next conditional pair of instructions.

Referring to Fig. 10 d), the condition tested by 1020 in the address stage may be an overflow of AC2. Thus, 1020 must wait for the result of 1022 before evaluating the condition and hence cannot be executed in parallel with 1022 and therefore it requires there to be a latency or delay in the pipeline since the condition to be tested, e.g. a register value, is not ready by the time the pipeline stage for evaluating the condition would normally occur. A typical example would be a condition evaluation at the address stage where instruction 1022 is updating a D Unit 112 accumulator AC2 in the execute stage.

Fig. 10(b) - (d) schematically shows various configurations of the instructions dependent upon the nature of the XCN instruction. The first pair of instructions, 1010 are followed by a conditional execution instruction 1008 (XCN). Conditional execution instruction 1008 makes the next pair of instructions, 1012 conditional. In the embodiment shown in Fig. 10(b), the conditional execution instruction 1008 occurs between 2 pairs of instructions 1010 and 1012 since the conditional execution instruction flow requires a pair of instructions to be conditional and the previous slot already comprises a pair of instructions. Thus, the conditional execution instruction has to executed standalone. In the embodiment shown in Fig. 10(b) both pairs of instructions 1010, 1012 comprise a latter instruction having its parallel enable bit "E" set such that parallel execution is possible.

Referring now to Fig. 10(c) a 16-bit conditional execution instruction (XCN) 1014, forms the latter half of an instruction pair 1016. As described with reference to Fig. 10(b) the XCN instruction makes the next pair of instructions 1018 conditional.

Fig. 10(d) schematically illustrates a 24-bit conditional execution instruction XCN 1020 occurring after an instruction 1022. The instructions 1020 and 1022 do not occur as part of a pair of instructions since the conditional execution instruction XCN in this example evaluates a condition at a point in the pipeline which is earlier than the point at which data would be available. The conditional execution instruction XCN 1020 operates on a next conditional pair of instructions 1024 in the manner similar to that described with reference to Figs 10(b) and (c) above.

In accordance with the preferred embodiment the address (XCNA) and data (XCND) status bits for the XCN instruction are part of the context information which is saved during an interrupt. Thus, since this information is restored on return from an interrupt, interrupts can be relatively easily serviced. Additionally, condition evaluation instructions may be incorporated for debugging thereby facilitating efficient real time emulation of program code, for example.

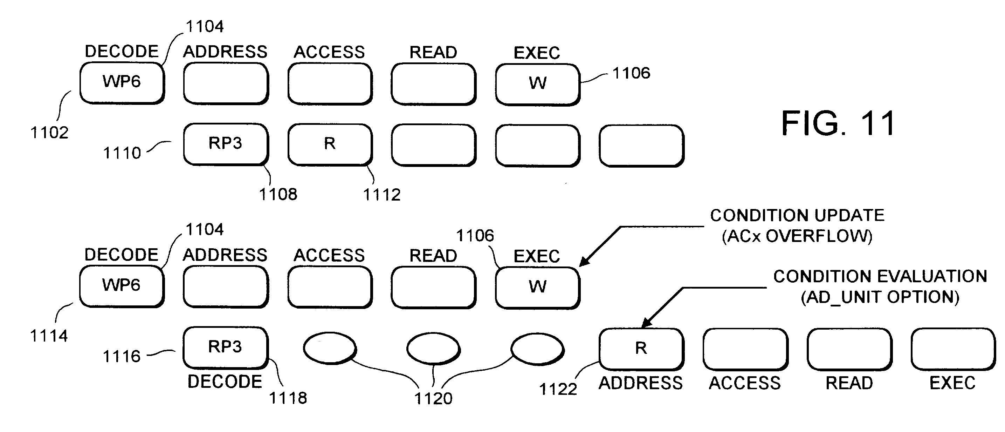

An advantage of preferred embodiments of the invention is that pipeline latency and the inclusion of redundant processor cycles may be reduced compared to the prior art. An example of the need for pipeline latency in the prior art with regard to conditional execution instructions is shown with reference to Fig. 11. The nomenclature used in Fig. 11. Is the same as that used when describing the processing pipeline stages with reference to Fig. 5. In an instruction pipeline thread 1102 an instruction 1104 is decoded as an instruction performing a write at the exec stage (P6) of the pipeline thread 1102.

Referring now to pipeline thread 1110, an instruction 1108 is decoded as requiring a read in the access stage (P3) of the pipeline thread. The read is shown labelled 1112 in the address stage (P2) of pipeline thread 1110. As is apparent from Fig. 11 the result of the first instruction 1104, provided in the execute stage 1106, is not available for the access stage read of instruction 1108. Thus, there is an inconsistency between the write and read required for the respective instructions in the pipeline processor.

Referring to pipeline thread 1114 the same instruction, 1104, is shown proceeding through the pipeline stages. By way of example, the write, 1106, is to an accumulator ACx. Pipeline thread 1116 shows a method of overcoming the pipeline inconsistencies exemplified with reference to pipeline thread 1102 and 1110. After the decode stage 1118 of instruction 1108 (RP3) redundant processor cycles, or NOPs instructions, 1120 are inserted into respective pipeline stages address, access, and read. Thus, pipeline thread 1116 enters the address stage 1122 after the execution of the write 1106 for instruction 1104, and the condition can be evaluated. In such circumstances, pipeline thread 1116 would not require NOPs 1120, or be able to evaluate the condition on the exec stage which would occur after the execute stage of instruction 1104. However, even utilising embodiments of the present invention, latency may occur.

Even though in the preferred embodiment there are three pipeline stages where a condition may be evaluated, the Address, Read and Execute stages. The variable on which the condition is based must be ready by the stage at which it is to be evaluated.

Thus, if a condition is based on an accumulator overflow, and the conditional execution option is AD_unit there is an implied evaluation in the address slot of the later instruction, to conditionally post-modify a pointer for example. The situation described with reference to Fig. 11 for the prior art would then have been created by selecting the AD_unit option. As in Fig. 11, since the accumulator is updated in the Execute stage of the pipeline, the Address slot of the conditional instruction has to be delayed, either by appropriate programming, or by inserting NOPs or redundant cycles.

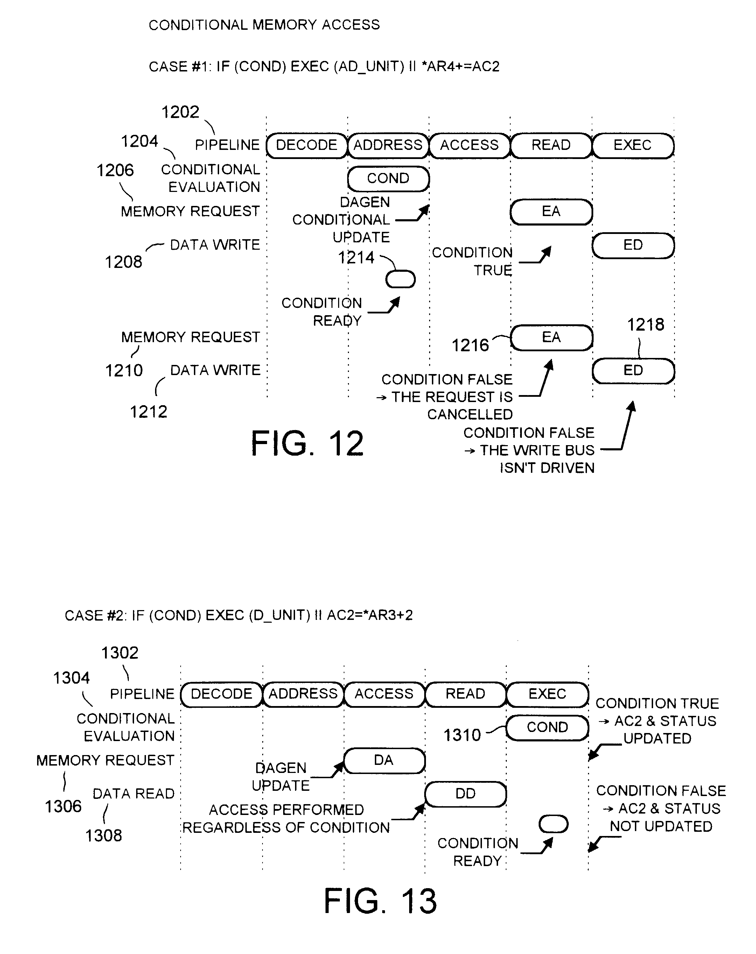

Referring now to Figs. 12 to 15, conditional execution instructions in accordance with preferred embodiments of the invention will now be described operating on memory access instructions. A memory write instruction generally requires two processor cycles for its execution. On the first cycle a memory request signal is asserted, and on the second cycle data is written to the memory. If the memory write instruction is to be conditional upon the result of the condition test, the memory request should be cleared for a false condition for example. Thus, it is desirable that the condition is tested sufficiently early in the processor pipeline in order to clear the request and abort the memory write instruction at some later stage in the pipeline. Clearing the request is generally carried out by the memory management unit 104.

Fig. 12 shows the pipeline stages 1202 for a conditional memory access instruction having the syntax "if (cond) exec (AD_unit) || *AR4+=AC2", which performs a condition test defined by "if (cond)" which makes conditional the address through to execute stages of pipeline 1202 for the instruction to store the contents of accumulator AC2 into a memory location indirectly addressed by the pointer contained in register AR4, and to post modify the contents of AR4. Since this instruction is a memory write instruction, the memory request, 1206, appears on read bus EA in the read stage of pipeline 1202. Thus, it would be preferable to cancel the request at the immediately preceding stage, i.e. the access stage of the pipeline 1202. However, in accordance with the preferred embodiment there is no conditional evaluation circuitry operable for the access stage. Thus, as shown in reference to 1204 the condition is evaluated in the address stage of the pipeline. The condition is ready, 1214, during the address stage, and the DAGEN unit 32 conditionally updates the address at the end of the address stage. For the condition being true then the memory request signal is asserted on the EA bus, and the data is written to the memory location on bus ED in the execute stage pipeline as shown by line 1208. Lines 1210 and 1212 respectively show the situation for the memory request and data write should the condition be false. The memory request on the read bus EA is cancelled and not asserted as illustrated by dotted line 1216, and the write bus ED is not driven as shown by dotted lines 1218.

A second conditional memory access instruction is now be described with reference to Fig. 13, in which the pipeline is labelled 1302. The conditional memory access instruction has the syntax "if (cond) exec (D_unit) || AC2= *AR3+" which evaluates a condition and inhibits the execute stage of pipeline 1302 for a false condition for the instruction to load accumulator AC2 with the contents of the indirectly addressed memory location pointed to by the pointer stored in register AR3. The register AR3 is also post modified. As shown on line 1304 the condition is evaluated 1310 at the execute stage of the pipeline 1302. Line 1306 shows that the memory request is asserted on the data address bus DA during the access stage of the pipeline, the address having previously been updated in the DAGEN unit 32. Line 1308 shows that the read access is performed, DD, regardless of the condition, and that the condition is ready in the execute stage of the pipeline. At the end of the execute stage, should the condition be true then accumulator AC2 is updated together with a status, and if the condition is false then the accumulator and statusregister are not updated.

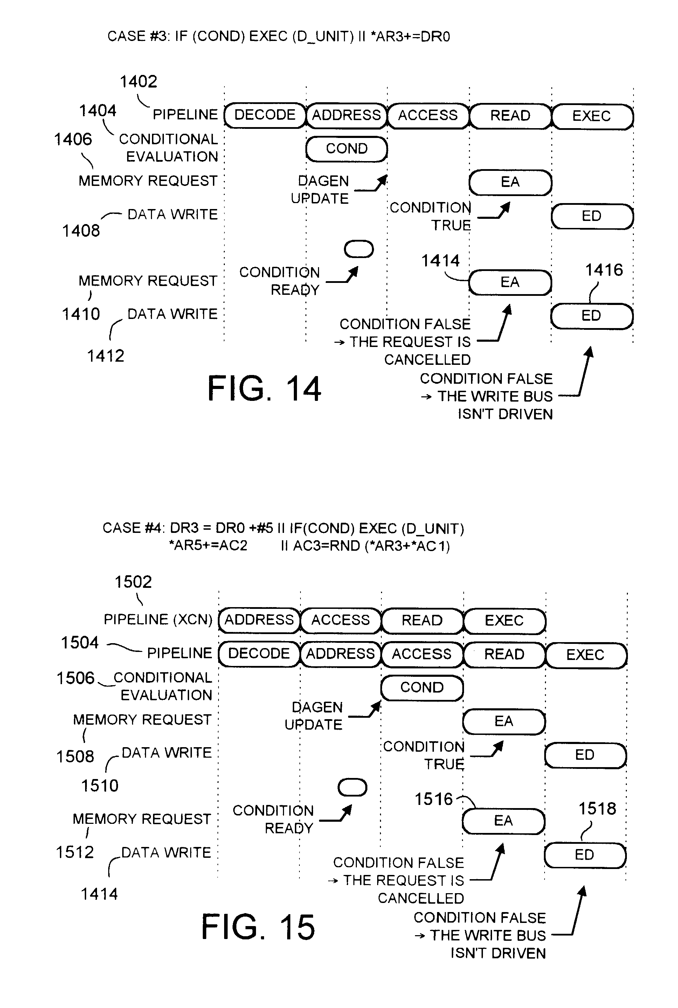

A third example of a conditional memory access instruction is described with reference to Fig. 14. The instruction has the syntax "if (cond) exec (D_unit) || *AR3+=DR0" which stores the contents of data register DR0 into the memory location indirectly addressed by the pointer contained in address register AR3 providing the condition is true, and if the condition is not true then the execute stage of the pipeline for that instruction is inhibited. As shown by line 1404 the condition is evaluated in the address stage, and line 1406 shows that the address information is updated by the DAGEN unit 32 unconditionally since the conditional instruction only has effect in the execute stage of the pipeline 1402. Line 1406 also shows that for a true condition a memory request is asserted on the read bus EA, and line 1408 shows that data is written on the ED bus for the execute stage of the pipeline. For the condition being false line 1410 shows that the memory request is not asserted and data bus AD is not driven for a false condition shown schematically by dotted line 1414, 1412 and 1416.. The foregoing example shows a situation where selection of the execute stage of the pipeline would allow for the update of the address information irrespective of the result of the condition test. This type of instruction has particular application in an algorithm which sequentially accesses a data array, but only performs operations on the contents of the data array dependant upon a condition being true.

A fourth example of a conditional memory access instruction can now be described with reference to Fig. 15. The instruction has the syntax:
"DR3=DR0+#5 || if(cond) exec (D_unit)
*AR5+=AC2 ||AC3=rnd (*AR3+*AC1)",

in which the second line of the above instructions execute stage dependent on whether the condition based on the result of the second half of the instruction in the first line above is true. Line 1502 shows the pipeline for the conditional execution instruction which makes the following instruction conditional upon its result, and pipeline 1504 is the second conditional instruction. Line 1506 shows that the condition is based on the condition evaluated at the read stage of pipeline 1502, since the condition is based on the D_unit option and the conditional instruction pair includes a memory write instruction. The address information is updated by the DAGEN unit 32 at the end of the address stage of pipeline 1504. For a condition true, line 1508 shows that the memory request is asserted on the read bus EA for the read stage of pipeline 1504, and line 1510 shows that data is written on bus ED for the execute stage of pipeline 1504. Lines 1512 and 1514 respectively show that the memory request is cancelled, dotted line 1516, and the data right bus is not driven dotted line 1518 for a false condition.

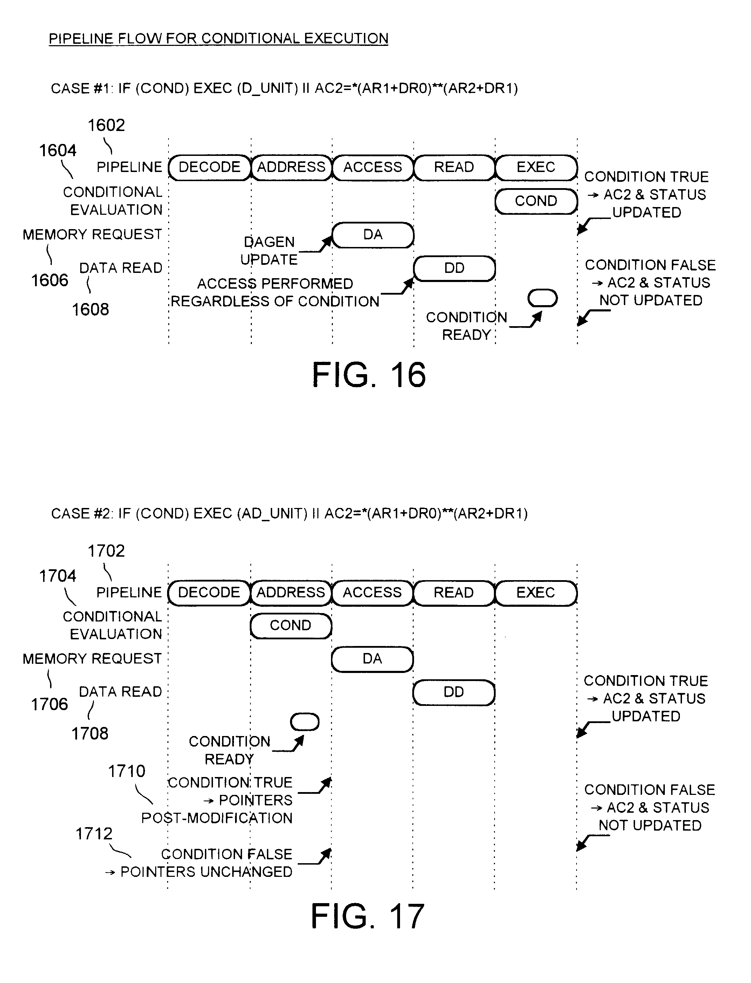

Turning now to Fig. 16 and 17, examples of the pipeline flow for conditional execution of instructions operating on data flow will now be described. Fig. 16 illustrates the pipeline flow for an instruction having syntax "if (cond) exec (D_unit) || AC2=*(AR1+DR0)**(AR2+DR1)", in which the execute stage of the second half of the instruction, the conditional instruction, is inhibited should the condition be false. Line 1602 shows the pipeline stages for the instruction, and line 1604 shows that the condition is evaluated in the execute stage of pipeline 1502. In line 1506 the address information is updated by DAGEN 32, and since this is a data read only instruction a memory request is asserted on the data address bus DA. In line 1508 the data is read across the data bus DD during the read stage of pipeline 1502. Since the condition status affects only the execute stage of pipeline 1502 both the memory request and data read are carried out regardless of the condition result. At the end of the execute stage the accumulator AC2 and the status are updated with the condition being true, and are not updated for a false condition. Turning now to Fig. 17, it can be seen that the same instruction now has its address through execute stages conditional upon the result of a test in line 1704 at an address stage of pipeline 1702. The condition is ready at the address stage of pipeline 1702. Line 1706 shows that the memory request is asserted on the data address bus DA at the access stage of pipeline 1702, and line 1708 shows that the data is read across a data bus DD in the read stage of pipeline 1702. Since the instruction inhibits the address through execute stages of the pipeline should the condition be false, then post-modification of the pointers at the end of the address stage only occurs for a true condition 1710, otherwise the pointers are unchanged at 1712. As was the case with the instruction described with reference to Fig. 16, the accumulator AC2 and the status are updated for the condition being true, and not updated for a false condition. Comparing the instructions described with reference to Fig. 16 and 17, it can been seen that by selecting which stage of the pipeline is to be conditional, i.e. just the execute stage or stages address through to execute, possible to select address information to be made conditional together with the result of the operation or just to conditionally execute the operation. This provides greater flexibility in programming the processing engine.

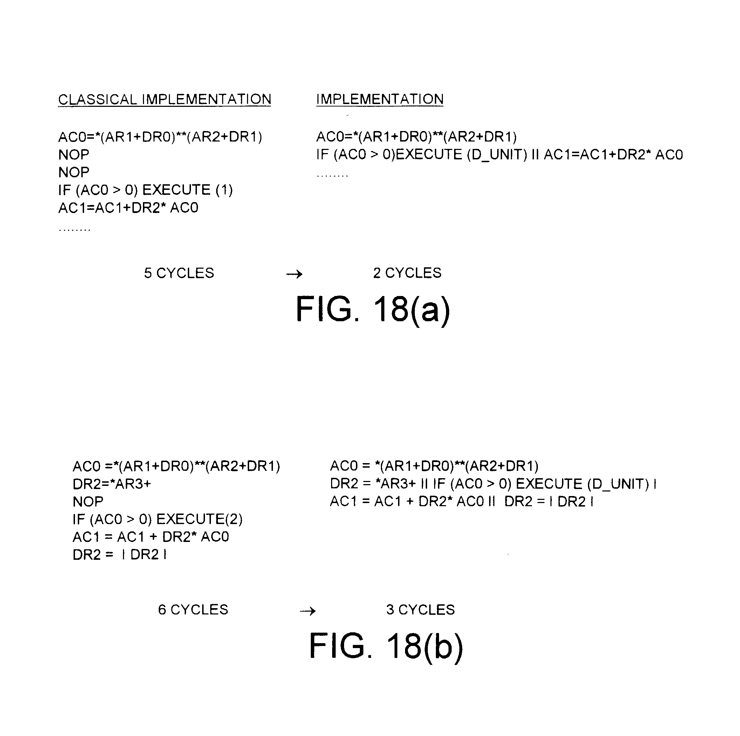

Referring now to Fig. 18, a comparison between the conventional ("classical") implementation and an implementation in accordance with a preferred embodiment of the invention is described.

In the classical implementation shown in Fig. 18(a), the condition evaluation is carried out after a delay (nop) of two cycles from the instruction whose result is to be evaluated. This is due to the fact that in the classical implementation the condition is evaluated two cycles before the instruction which is conditional on the result of the condition evaluation. In the preferred implementation, the D_unit condition option is used and hence only the execute stage of the conditional instruction is dependent on the condition evaluation result. Thus, the condition can be evaluated in the execute stage and accumulator AC1 updated. Therefore, no delay cycles are necessary, and there is a saving of 2 cycles over the classical implementation in this respect. In all there is a saving of three cycles since the conditional execution instruction and conditional instruction are executed in parallel.

Similarly for Fig. 18(b), but a 6 cycle delay occurs in the classical implementation since there are two instructions before the condition instruction. The preferred implementation takes only three cycles since no delay is necessary due to the fact that an instruction which does not affect the condition is included and takes the place of a nop, and the instructions can be executed in parallel.

In view of the foregoing description it will be evident to a person skilled in the art that various modifications may be made within the scope of the invention. For example, the XC instruction, i.e. that which can be performed in parallel with the instruction whose execution conditional, may be repeated as a single repeat statement in a single repeat loop. Thus, an instruction such as a multiply accumulate instruction could be repeated until an overflow occurs.

If the AD_unit condition option is chosen the accumulator update and operand pointers are no longer updated once the overflow occurs. In practice, the instruction will be iterated a few more times due to pipeline flow. However, accumulators typically have guard bits. e.g. 8. and a user will be able to determine at which step an overflow occurred and from which operand address, and take any appropriate action.

Optionally, an instruction can be made conditional upon an operand being positive. For example, the instruction can be executed for positive operands and skipped for negative operands. In this instance, the D_unit condition option is used in order to update address pointers so that all the elements in a table for example, are scanned. The condition is evaluated from the operand shadow register stored in the read stage of the pipeline.

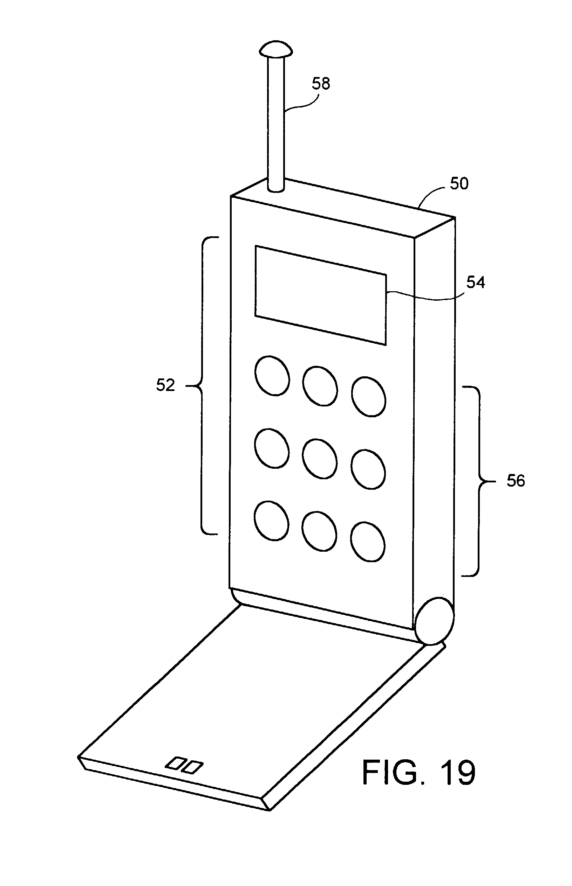

Embodiments of the invention are suitable for wireless communication devices such as a radio telephone 50 illustrated in Fig. 19. Such a radio telephone 50 comprises a user interface 52 including a display 54 such as a liquid crystal display, and a key pad 56. The radio telephone also includes a transceiver, not shown, and an antenna 58.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A processing engine, comprising an instruction pipeline including a plurality of pipeline stages the processing engine responsive at a selectable one of said pipeline stages to a first condition instruction to conditionally execute a second instruction.

2. A processing engine according to claim 1, further comprising a condition evaluation mechanism selectively operable for two or more pipeline stages.

3. A processing engine according to claim 2, wherein said condition evaluation mechanism is responsive to said first condition instruction to test for a condition at a pipeline stage determined by said second instruction.

4. A processing engine according to claim 1, further comprising two or more condition evaluation mechanisms respectively operable for two or more pipeline stages.

5. A processing engine according to claim 4, wherein said two or more condition evaluation mechanisms are configurable to be operable for address, read and execute stages of said instruction pipeline.

6. A processing engine according to any preceding claim, further comprising execution units operable for respective pipeline stages and including said condition evalauation mechanism or said two or more condition evaluation mechanisms.

7. A processing engine according to any preceding claim, responsive to a first mode for said first condition instruction to inhibit a first set, including one, of said pipeline stages and responsive to a second mode for said first condition instruction to inhibit a second set, including one, of said pipeline stages for said second instruction.

8. A processing engine according to claim 7 responsive to said first mode for said first instruction to inhibit an execute stage of said instruction pipeline, and to said second mode for said first instruction to inhibit address, access, read and execute stages of said instruction pipeline for said second instruction.

9. A processing engine according to any preceding claim, further comprising an instruction buffer configurable to buffer the first condition instruction and second instruction for parallel execution.

10. A processing engine according to claim 9, wherein said instruction buffer comprises a dual dispatch buffer operable to dispatch said first condition instruction and said second instruction to first and second instruction decoder mechanisms.

11. A processing engine according to any of claims 1 to 8, further comprising an instruction buffer configurable to buffer said the first condition instruction with an independently operable third instruction for parallel execution, said second instruction buffered for following said first and third instructions.

12. A processing engine according to any preceding claim, wherein said first condition instruction comprises sixteen bits.

13. A processing engine according to any preceding claim, responsive to the first condition instruction for conditionally executing a following second instruction.

14. A processor comprising a processing engine according to any preceding claim.

15. A digital signal processor comprising a processing engine according to any of claims 1 to 8.

16. An integrated circuit comprising a digital signal processor according to claim 14, or a processor according to claim 15.

17. An integrated circuit comprising a processing engine according to any of claims 1 to 13.

18. A system comprising a digital signal processor according to claim 15 and a computer, said computer comprising a compiler for compiling program instructions for execution by said digital signal processor, the compiler being operable to determine a first or second mode of said first condition instruction and to configure said second instruction for conditional execution at a pipeline stage in accordance with said first or second mode of said first condition instruction.

19. A system according to claim 18, the compiler being further operable to concatenate said first condition instruction with said second or third instruction for parallel execution.

20. A system according to claim 18 or 19, the compiler configurable to determine program instructions capable of being concatenated, and compiling said first condition instruction and said second or third instructions for concatenation.

21. A system according to any one of claims 18 to 20, the compiler being further operable to determine an association between said first and second instruction.

22. A method for operating a processing engine including a plurality of pipeline stages, comprising conditionally executing a second instruction at a selectable pipeline stage.

23. A method according to claim 22, further comprising;
determining said first condition instruction as a first or second type, and
conditionally executing said second instruction at a pipeline stage corresponding to said type of first condition instruction.

24. A method according to claim 22 or claim 23, further comprising;
evaluating a condition at a pipeline stage dependent on said second instruction.

25. A method according to any of claims 22 to 24, further comprising;
executing said first condition instruction and said second instruction in parallel.

26. A method according to any one of claims 22 to 24, further comprising;
responding to said first condition instruction and an independently operable third instruction to execute said first condition instruction and third instruction in parallel.

27. A method according to any one of claims 22 to 26, comprising;
associating said first condition instruction with a subsequent second instruction, and
responding to said first condition instruction to conditionally execute said second instruction.

28. A method according to claim 22, further comprising;
executing said first condition instruction as a standalone instruction to account for latency in said processing pipeline.

29. A method according to claim 26 or claim 27, wherein said second instruction comprises a pair of instructions configured for parallel execution.

30. A telecommunications device comprising a digital signal processor according to claim 18.

31. A telecommunications device operable in accordance with a method according to any one of claims 22 to 29.

32. A wireless communication device comprising a telecommunications device according to claim 29 or 30, a user interface including a display, a key pad or key board for inputting data to the communications device, a transceiver and an antenna.
